# EUROPÄISCHE PATENTSCHRIFT

(11) **EP 0 865 813 B1**
(45) Veröffentlichungstag und Bekanntmachung des Hinweises auf die Patenterteilung: **02.05.2003**
(21) Anmeldenummer: 97120688.3
(22) Anmeldetag: 26.11.1997
(51) Int. Cl.: B01D 46/52, B01D 29/00

(54) **Kassettenfilter mit Rahmen**
Filter cartridge with a frame
Cassette filtrante avec cadre

(30) Priorität: 18.03.1997 DE 19711280
(43) Veröffentlichungstag der Anmeldung: 23.09.1998
(73) Patentinhaber: Carl Freudenberg KG, 69469 Weinheim (DE)
(72) Erfinder: Hoffmann, Margit, 69517 Gorxheimertal (DE); Schuster, Matthias, Dr., 69518 Absteinach (DE); Brandhofer, Andreas, 69488 Birkenau (DE); Knudsen, Jörgen, 74918 Angelbachtal (DE); Lippold, Hans-Joachim, Dr., 14089 Berlin (DE)

(56) Entgegenhaltungen:
- US-A- 4 885 015
- US-A- 5 273 564
- PATENT ABSTRACTS OF JAPAN vol. 015, no. 496 (C-0894), 16.Dezember 1991 & JP 03 217210 A (SANYO ELECTRIC CO LTD), 25.September 1991,
- PATENT ABSTRACTS OF JAPAN vol. 018, no. 421 (C-1234), 8.August 1994 & JP 06 126119 A (NIPPON MUKI CO LTD), 10.Mai 1994,

## Beschreibung

### Technisches Gebiet

Kassettenfilter werden für den Aufbau von Filteranlagen verwendet. Dabei sind die Filterelemente in einem Rahmen oder Kasten angeordnet, um die Dichtungs- und Stützfunktion sowie eine leichte Austauschbarkeit zu gewährleisten.

### Stand der Technik

Aus der DE-OS 195 02 366 ist ein Kassettenfilter bekannt, der ein Faltenfilterelement und einen aus Platten gebildeten Rahmen aufweist. Die Platten sind an den Seitenflächen des Filterelements herum angeordnet und im Bereich ihrer Enden durch eine Klebstoffschicht miteinander verbunden. Eine weitere Klebstoffschicht ist zur staubdichten Festlegung des Filterpacks an den Platten vorgesehen.

Der Zusammenbau eines derartigen Kassettenfilters erfolgt dergestalt, daß die den Kasten bildenden Platten nacheinander an das Filterelement angeklebt werden und schließlich miteinander verklebt werden. Dabei muß eine genaue Positionierung der Platten erfolgen, um eine saubere Verklebung zu erreichen.

Aus der US-A-5 273 564 ist ein Kassettenfilter bekannt, dessen Rahmen aus einem einzigen Stück gebildet ist und ein Filterelement umschließt. Dazu sind die Seitenteile des Rahmens umlegbar und über eine Steckverbindung miteinander zu verbinden. Die Steckverbindung weist dabei Laschen und Vorsprünge auf, so dass eine Rastverbindung hergestellt werden kann.

Die Aufgabe der Erfindung besteht darin, die Herstellung eines Kassettenfilters so zu vereinfachen, daß auf aufwendige Positionier- bzw. Haltevorrichtungen sowie Kleber oder andere separate Verbindungsmittel verzichtet werden kann.

### Darstellung der Erfindung

Gemäß der Erfindung sind die Platten von übereinstimmender Länge und Gestalt und weisen Mittel einer Steckverbindung auf, die mit jeweils entsprechenden Mitteln der benachbarten Platten zusammenwirken und die Platten zueinander festlegen. Im Gegensatz zu den bekannten verklebten Rahmen ist der Zusammenbau deutlich vereinfacht, da kein Auftrag von Klebstoff bzw. keine Aushärtezeit desselben vonnöten ist. Darüber hinaus läßt sich der Rahmen aus einem einzigen Grundelement herstellen.

Vorteilhafterweise umfaßt jede Steckverbindung zumindest einen an einer ersten Platte angeordneten Vorsprung, welcher mit einer Eintiefung einer zweiten Platte in Eingriff bringbar ist, wobei sich der Vorsprung sich zur zweiten Platte hin erstrecken kann. Der Vorsprung einer Platte ist gegenüber dieser abgewinkelt, beispielsweise um 90° und erstreckt sich zur zweiten Platte hin.

Weiterhin vorteilhaft bilden die Platten im Bereich der Steckverbindung einen Kopfrahmen und/oder Fußrahmen. Dadurch ist die Unterbringung der Steckverbindung in platzsparenderweise ohne Vergrößerung der üblicherweise verwendeten Abmessungen möglich.

Zusätzlich zu der Steckverbindung kann eine Verrastung vorgenommen werden, wobei Rastmittel vorgesehen sind. Diese Rastmittel können lösbar oder unlösbar sein. Dadurch werden die einzelnen Platten gegenseitig gehalten.

Weiterhin ist es möglich, anstelle oder zusätzlich zu der Steckverbindung Laschen zum Umklappen vorzusehen, insbesondere im von der Steckverbindung entfernteren Bereich.

Zur weiteren Verbesserung des mechanischen Zusammenhalts kann eine Rastnocken-Nut-Verbindung entlang der Berührungslinie zweier Platten vorgesehen werden.

Zur weiteren Versteifung des Rahmens des Kassettenfilters kann ein Schutzgitter vorgesehen werden, das die Platten zumindest im Bereich der einen Stimseite des Filterelements verbindet. Dadurch wird das Filterelement vor mechanischen Eingriffen während der Montage geschützt.

Vorteilhafterweise sind das Schutzgitter und die Platte durch eine Rastverbindung aneinander festgelegt.

Zur Abdichtung des Filterelements gegen die Platten des Rahmens des Kassettenfilters ist es vorteilhaft, wenn das Filterelement unter Vorspannung an den Platten anliegt.

Vorzugsweise sind zwischen dem Filterelement und den Platten zumindest Dichtstreifen eingefügt, wobei auch die Platteninnenseite bedeckende Dichtmatten vorgesehen werden können. Diese Dichtelemente haben den Zweck eine staubdichte Abdichtung sicherzustellen. Dabei wird unter diesen Dichtelementen auch eine Schicht aus Klebstoff verstanden. Hier wäre eine Verspannung nicht erforderlich.

Um das Filterelement in seiner räumlichen Lage in dem Rahmen festzulegen, können die Platten im Bereich von einer Stimseite des Filterelements dieses mit einem Steg übergreifen.

Weiterhin ist ein Bausatz zur Herstellung eines Kassettenfilter vorgeschlagen, der ein quaderförmiges Faltenfilterelement und vier übereinstimmende Platten aufweist, welche durch eine Steckverbindung aneinander festlegbar und dichtend mit dem Faltenfilterelement verpreßbar sind.

### Kurzbeschreibung der Zeichnung

Ein Kassettenfilter gemäß der Erfindung ist in mehreren Varianten in der Zeichnung dargestellt. Es zeigt:
- Fig. 1: Explosionszeichnung eines Kassettenfilters mit Schutzgitter,
- Fig. 2: eine Platte des Kassettenfilters in Seitenansicht,
- Fig. 3: die Platte aus Fig. 2 in Draufsicht,
- Fig. 4: die Platte aus Fig. 2 und 3 in Seitenansicht,
- Fig. 5: die Platte aus den Fig. 2 bis 4 in perspektivischer Ansicht,
- Fig. 6: eine Detailzeichnung der Eckverbindung zweier Platten von außen,
- Fig. 7: eine Detailzeichnung der Eckverbindung zweier Platten gemäß Fig. 6 in der Ansicht von innen,
- Fig. 8: einen Schnitt längs der Linie A-A aus Fig. 6 in Vergrößerung,
- Fig. 9: einen Schnitt aus der Fig. 6 längs der Linie B-B in Vergrößerung,
- Fig. 10: einen Schnitt längs der Linie C-C aus Fig. 6 in Vergrößerung,
- Fig. 11: einen Ausschnitt der Ansicht D aus Fig. 7 in Vergrößerung bezüglich der Griffschutzbefestigung,
- Fig. 12: einen Schnitt längs der Linie E-E aus Fig. 7 bezüglich der Griffschutzarretierung,
- Fig. 13: eine weitere Platte mit einer zusätzlichen Verbindung im Fußbereich,
- Fig. 14: einen Schnitt längs der Linie A-A aus Fig. 13 und
- Fig. 15: eine Draufsicht auf die Platte gemäß Fig. 13 und 14.

### Ausführung der Erfindung

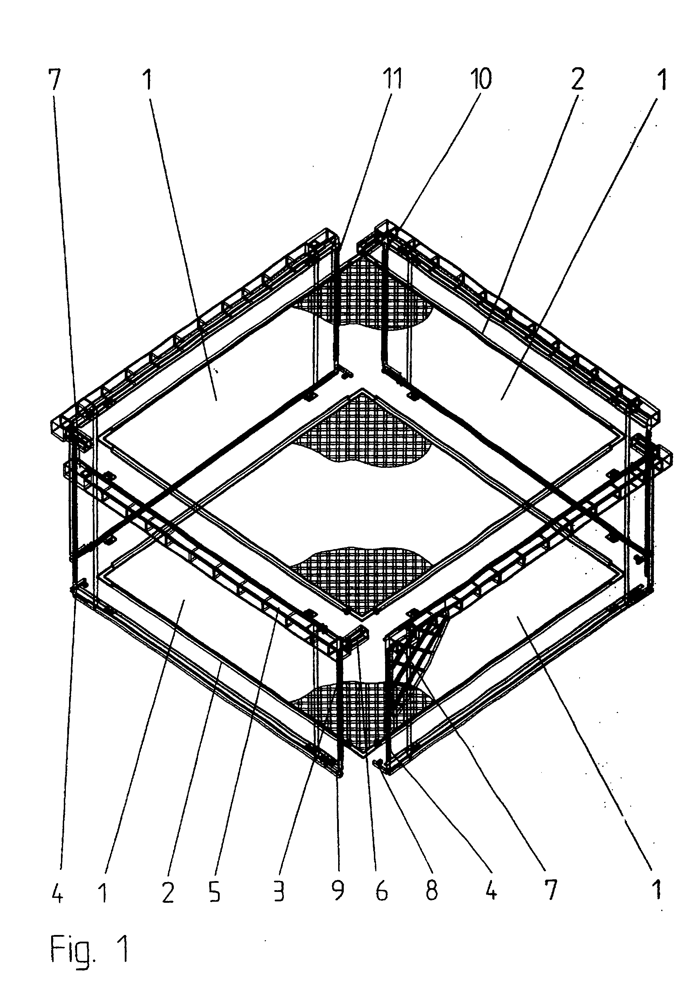

Der in Fig. 1 dargestellte Kassettenfilter besteht aus 4 Platten 1, die zu einem rechteckigen oder quadratischen Kastenrahmen zusammengebaut werden und um ein nicht dargestelltes Faltenfilterelement herum angeordnet werden. Zum Schutz des durch die Platten 1 eingeschlossenen Faltenfilterelements sind auf den Stirnseiten des durch die Platten 1 gebildeten Rahmens Schutzgitter 2 angeordnet, insgesamt also zwei.

Jede Platte 1 ist an zwei gegenüberliegenden Seiten 3 mit der jeweils benachbarten Platte verbunden. Die Verbindung erfolgt durch den Einsatz verschiedener Mittel, die voneinander unabhängig sind.

Die Platte 1 weist einen Kopfrahmen 5 auf, der sich zwischen den Seiten 3 und 4 über die gesamte Breite der Platte 1 erstreckt. Im Bereich einer Seite 3 weist der Kopfrahmen einen im Winkel von 90° von der Platte abstehenden Vorsprung 6 auf, der mit einem an der gegenüberliegenden Seite 4 angeordneten Aufnahmeraum 7 eine Steckverbindung bildet. Eine weitere Steckverbindung wird durch eine an der Seite 4 angeordnete umlegbare Lasche 8 hergestellt, wobei die Lasche 8 mit einer entsprechende Ausnehmung 9 im Bereich der Seite 3 in Eingriff gebracht wird. Schließlich ist eine dritte Steckverbindung vorgesehen, welche sich entlang der Berührungslinie zweier benachbarter Platten 1 erstreckt und aus einem Rastnocken 10 einerseits und einer Nut 11 andererseits besteht.

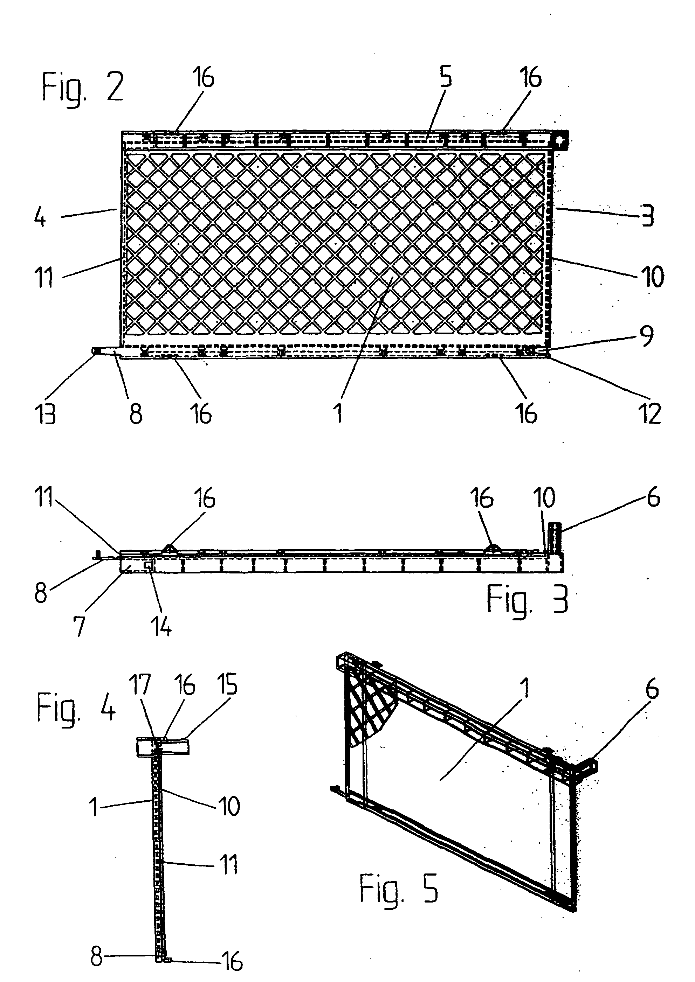

Die Seitenansicht der Platte gemäß Fig. 2 verdeutlicht die Anordnung der Lasche 8 und Aufnahme 9 im Bereich der Seiten 3, 4. Die Platte 1 ist mit einer Ausnehmung 12 versehen, welche mit einem Vorsprung 13 einer benachbarten Lasche 8 in Eingriff gebracht wird. Zusätzlich sind an den Seiten 3, 4 sich über fast die gesamte Seite erstreckende Rastnocken 10 und entsprechende Aussparungen 11 vorgesehen, deren Zusammenspiel in Fig. 3 weiter ersichtlich wird. Ebenfalls in Fig. 3 ist der im Kopfrahmen 5 angeordnete Vorsprung 6 sowie der entsprechende Aufnahmeraum 7 dargestellt. Der Aufnahmeraum 7 ist mit einer Verriegelungsöffnung 14 versehen, in welchen Rastnocken 15, dargestellt in Fig. 4, zum Eingriff gebracht werden können.

Der Kopfrahmen 5 weist an seiner dem einzuschließenden Raum zugewandten Seite Auflagen 16 für das Schutzgitter 2 auf, die auch zur lösbaren Befestigung, beispielsweise mittels Schrauben, dienen. Diese Auflage 16 findet sich auch im Fußbereich der Platte 1. Weiterhin weist die Platte 1 im Kopfrahmen 5 und im Fußbereich eine Führungsnut 17 auf, in welche Rippen des Schutzgitters eingreifen.

Die Verriegelungselemente an der Seite lassen sich auch in Fig. 4 erkennen, nämlich die Lasche 8, der Rastnocken 10 und die Aussparung 11, die in räumlicher Ebene versetzt zueinander angeordnet sind.

In Fig. 5 ist das Plattenteil in perspektivischer Ansicht dargestellt, wobei hier insbesondere der Vorsprung 6 in seiner räumlichen Lage zur Platte 1 gezeigt ist.

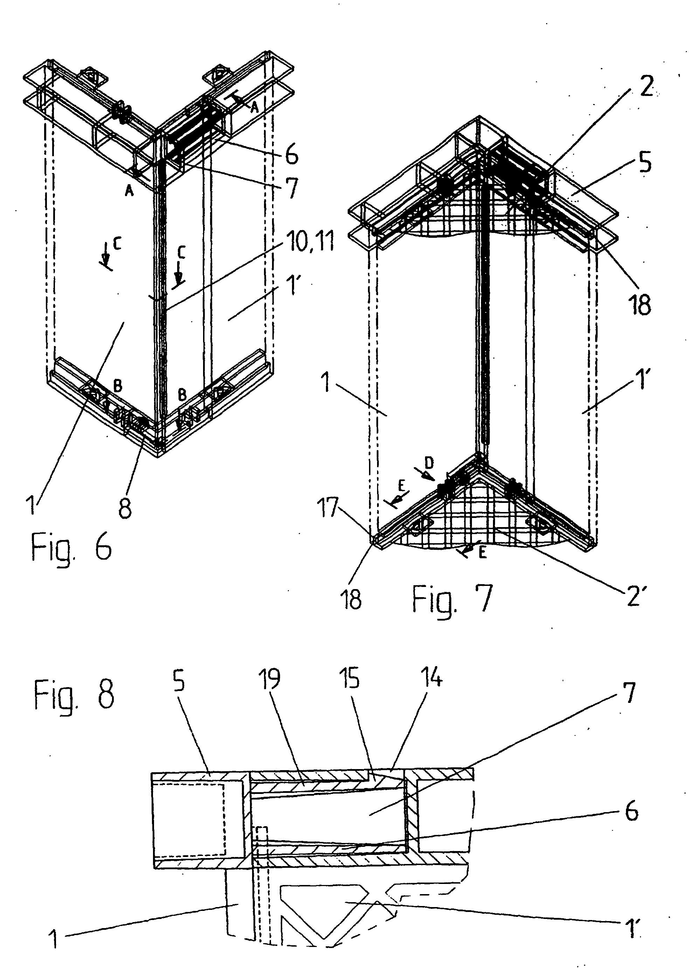

Fig. 6 zeigt eine durch Zusammenstecken zweier Platten 1, 1'- entstandene Ecke des Rahmens für einen Kassettenfilter in Außenansicht. Man erkennt die um die Ecke gebogenen Laschen 8 und den in dem Aufnahmeraum 7 zum Eingriff gebrachten Vorsprung 6. Weiterhin ist der Rastnocken 10 in die Aussparung 11 eingeclipst, so daß entlang der Seiten der Platten eine feste Verbindung vorliegt.

In Fig. 7 ist die Ansicht der Ecke aus Fig. 6 von innen dargestellt, wobei zwei Schutzgitter 2, 2' angebracht wurden. Die Schutzgitter 2, 2' verfügen über Rippen 18, die in der Führungsnut 17 im Kopfrahmen 5 bzw. Fußbereich der Platte 1 zu liegen kommen.

In Fig. 8 ist die Steckverbindung über den Vorsprung 6 und den Aufnahmeraum 7 zweier benachbarter Platten 1, 1' in Vergrößerung gezeigt Der auf dem Vorsprung 6 liegende Rastvorsprung 15 greift in die Ausnehmung 14 ein, so daß ein Formschluß vorliegt. Während des Zusammenbaus ist der den Rastvorsprung 15 tragende Schenkel 19 gedrückt, um dann bei Erreichen der Ausnehmung 14 zurückzufedern und eine Einrastung zu bewirken.

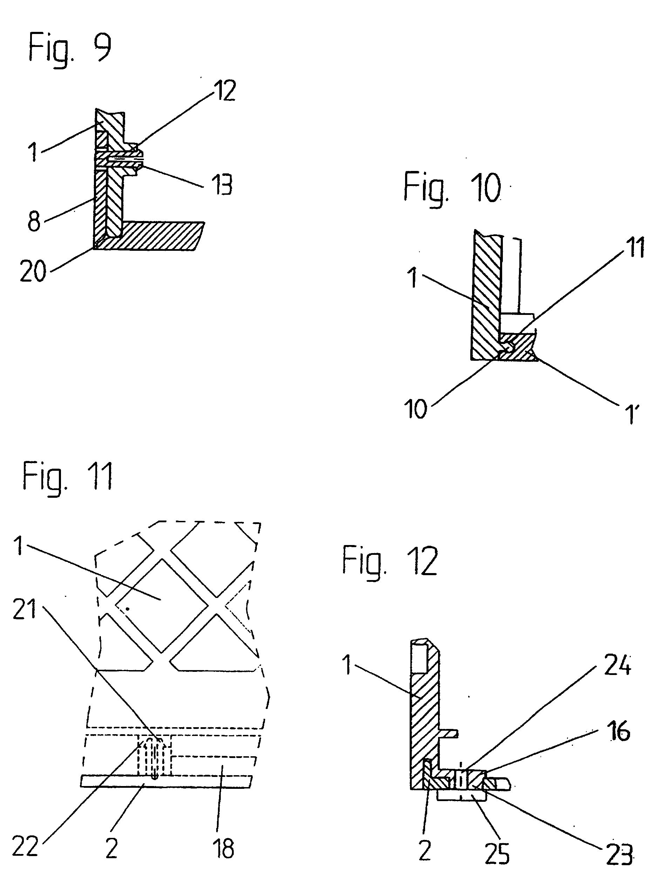

Fig. 9 zeigt eine Vergrößerung der Steckverbindung mittels der Laschen 8. Diese Lasche 8 wird über ein Filmschamier 20 um 90° zur Platte 1 hin umgebogen und rastet im Bereich der Ausnehmung 12 unter dem Vorsprung 13 ein.

In Fig. 10 ist die Steckverbindung entlang der Seiten 3, 4 dargestellt. Der Rastnocken 10 der Platte 1 ist in die Aussparung 11 der Platte 1' hineingedrückt. Hierdurch wird eine formschlüssige Verbindung bewirkt.

In Fig. 11 ist die Befestigung des Schutzgitters 2 im Fußbereich der Platte 1 dargestellt. Die Rippe 18 ist mit einem Rastvorsprung 21 versehen, welcher in eine Ausnehmung 22 eingreift. In Fig. 12 ist die Arretierung des Schutzgitters 2 gezeigt. Die Platte 1 ist mit einer Auflage 16 versehen, die über einen zapfenförmigen Fortsatz 23 durch das Schutzgitter 2 hindurchragt. In der Auflage 16 und dem Fortsatz 23 befindet sich eine durchgehende Öffnung 24, in die eine Schraube eingedreht werden kann. Durch eine entsprechende Ausgestaltung des Schraubenkopfes 25 wird das Schutzgitter 2 gegen ein unbeabsichtigtes Entfernen gesichert.

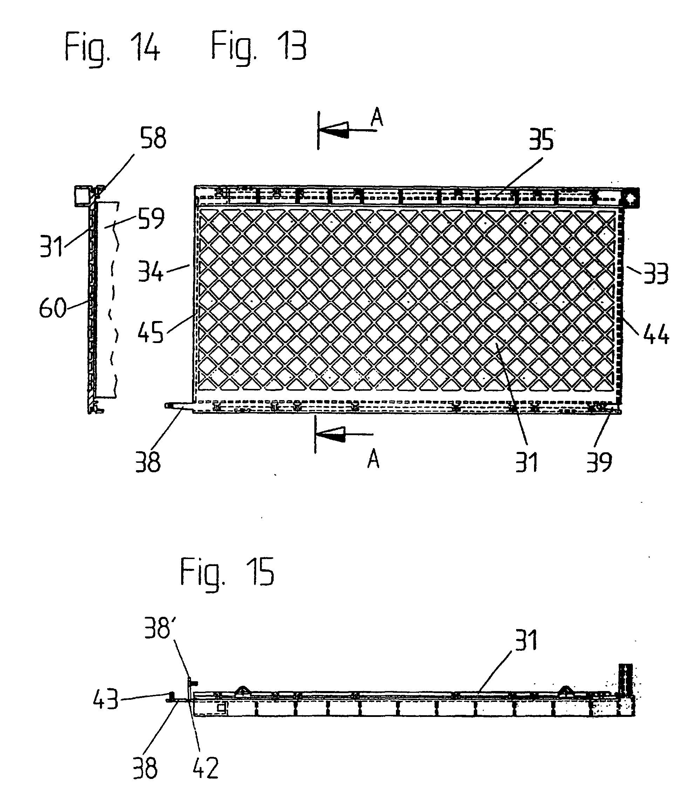

In Fig. 13 ist eine entsprechende Platte 31 dargestellt, die über einen Kopfrahmen 35 mit den vorerwähnten Verbindungsmitteln verfügt. Hier ist eine Lasche 38 im Fußbereich angeordnet, welche in eine Aufnahme 39 der benachbarten Platte zum Eingriff gebracht werden kann. Entlang der Seiten 33, 34 erstreckt sich ein Rastvorsprung 44 bzw. eine Aussparung 45 und sorgt für eine mechanische Stabilität entlang der gesamten Seiten.

In Fig. 14 sind Stege 58 vorgesehen, welche das Faltenfilterelement zumindest teilweise übergreifen. Hierdurch wird das Faltenfilterelement in seiner Lage räumlich fixiert. Zwischen das Faltenfilterelement 59 und die Platte 31 kann ein Dichtelement 60 angeordnet sein, welches beim Zusammenbau der Platten teilweise zusammengedrückt wird und so eine Dichtkraft herstellt.

In Fig. 15 ist die Lasche 38 in zwei verschiedenen Positionen dargestellt. Ausgehend von der sich längs der unmontierten Platte 31 erstreckenden Lasche 38' ist die Lasche 38- um 90° zur Innenseite der Platte 31 hin verschwenkt worden, wobei ein Filmschamier 42 das Verschwenken erleichtert. Die Lasche 38 ist mit einem Vorsprung 43 versehen, der in eine entsprechende Aufnahme an der benachbarten Platte zum Eingriff gebracht wird.

An die Stelle der Lasche 38 kann bei einem Fußrahmen auch eine weitere Steckverbindung entsprechend dem Vorsprung 6 und dem Aufnahmeraum 7 ausgebildet sein.

## Patentansprüche

1. Kassettenfilter, aufweisend ein Filterelement (59) und einen aus Platten (1) gebildeten Rahmen, wobei die Platten (1) um das Filterelement (59) herumlegbar und im Bereich ihrer Seiten (3,4) miteinander verbindbar sind, **dadurch gekennzeichnet, daß** die Platten (1, 1') als Einzelteile von übereinstimmender Länge und Gestalt ausgebildet sind und Mittel einer Steckverbindung (6,7; 8,9; 10, 11) aufweisen, die mit entsprechenden Mitteln benachbarter Platten (1') zusammenwirken.

2. Kassettenfilter nach Anspruch 1, **dadurch gekennzeichnet, daß** eine Steckverbindung zumindest einen Vorsprung (6; 10; 13) einer ersten Platte (1) umfaßt, welcher mit einer Eintiefung (7; 11; 12) einer zweiten Platte (1') in Eingriff bringbar ist.

3. Kassettenfilter nach Anspruch 1 oder 2, **dadurch gekennzeichnet, daß** sich der Vorsprung (6; 10; 13) zur zweiten Platte (1') hin erstreckt

4. Kassettenfilter nach einem der Ansprüche 1 bis 3, **dadurch gekennzeichnet, daß** die Platten (1, 1') im Bereich der Steckverbindung (6, 7) als Kopfrahmen (5) und/oder Fußrahmen ausgebildet sind.

5. Kassettenfilter nach einem der Ansprüche 1 bis 4, **dadurch gekennzeichnet, daß** die Steckverbindung (6, 7) zusätzliche Rastmittel (14, 15) aufweist.

6. Kassettenfilter nach einem der Ansprüche 1 bis 5, **dadurch gekennzeichnet, daß** die Steckverbindung (8, 9) aus umlegbaren Laschen (8; 38) besteht.

7. Kassettenfilter nach einem der Ansprüche 1 bis 6, **dadurch gekennzeichnet, daß** die Steckverbindung (10, 11) als eine entlang der Seiten (3, 4) zweier Platten (1, 1') verlaufende Verbindung aus Rastnocken und Nut (10, 11) ausgeführt ist.

8. Kassettenfilter nach einem der Ansprüche 1 bis 7, **dadurch gekennzeichnet, daß** die Verbindung durch ein Schutzgitter (2) gesichert ist, das die Platten (1, 1') zumindest im Bereich der einen Stimseite des Filterelements verbindet.

9. Kassettenfilter nach Anspruch 8, **dadurch gekennzeichnet, daß** die Schutzgitter (2) und die Platten (1, 1') durch eine Rastverbindung (21, 22) aneinander festgelegt sind.

10. Kassettenfilter nach einem der Ansprüche 1 bis 9, **dadurch gekennzeichnet, daß** das Filterelement (59) unter Vorspannung an den Platten (1, 1') anliegt.

11. Kassettenfilter nach einem der Ansprüche 1 bis 10, **dadurch gekennzeichnet, daß** zwischen das Faltenfilterelement (59) und die Platten (1, 1') ein Dichtelement (60) eingefügt ist.

12. Kassettenfilter nach Anspruch 10 oder 11, **dadurch gekennzeichnet, daß** die Platten dichtend mit dem Faltenfilterelement (59) verpreßt sind.

13. Kassettenfilter nach einem der Ansprüche 1 bis 12, **dadurch gekennzeichnet, daß** die Platten (1, 1') das Faltenfilterelement (59) zumindest im Bereich von einer Stirnseite mit einem Steg (58) übergreifen.

14. Bausatz zur Herstellung eines Kassettenfilters nach Anspruch 1 bis 13, **gekennzeichnet durch**
- ein quaderförmiges Faltenfilterelement (59) und
- vier übereinstimmend ausgebildete Platten (1), die **durch** mindestens eine Steckverbindung aneinander festlegbar und dichtend mit dem Faltenfilterelement (59) verpreßbar sind.

## Claims

1. A cartridge filter, having a filter element (59) and a frame formed from plates (1), the plates (1) being capable of being laid around the filter element(59) and of being connected to one another in the region of their sides (3, 4), **characterized in that** the plates (1, 1') are designed as individual parts of identical length and configuration and have means of a plug connection (6, 7; 8, 9; 10, 11) which cooperate with corresponding means of adjacent plates (1').

2. A cartridge filter according to claim 1, **characterized in that** a plug connection comprises at least one projection (6; 10; 13) of a first plate (1), the said projection being capable of being brought into engagement with a depression (7; 11; 12) of a second plate (1').

3. A cartridge filter according to claim 1 or 2, **characterized in that** the projection (6; 10; 13) extends towards the second plate (1').

4. A cartridge filter according to any one of claims 1 to 3, **characterized in that** the plates (1, 1') are designed in the region of the plug connection (6, 7) as a head frame (5) and/or a foot frame.

5. A cartridge filter according to any one of claims 1 to 4, **characterized in that** the plug connection (6, 7) has additional latching means (14, 15).

6. A cartridge filter according to any one of claims 1 to 5,**characterized in that** the plug connection (8, 9) consists of fold-around tabs (8; 38).

7. A cartridge filter according to any one of claims 1 to 6, **characterized in that** the plug connection (10, 11) is designed as a connection running along the sides (3, 4) of two plates (1, 1') and consisting of a latching boss (10) and of a groove(11).

8. A cartridge filter according to any one of claims 1 to 7, **characterized in that** the connection is secured by means of a protective grid (2) which connects the plates (1, 1') at least in the region of one end face of the filter element.

9. A cartridge filter according to claim 8, **characterized in that** the protective grid (2) and the plates (1, 1') are fixed to one another by means of a latching connection (21, 22).

10. A cartridge filter according to any one of claims 1 to 9, **characterized in that** the filter element (59) bears under prestress on the plates (1, 1').

11. A cartridge filter according to any one of claims 1 to 10, **characterized in that** a sealing element (60) is inserted between the folded filter element (59) and the plates (1, 1').

12. A cartridge filter according to claim 10 or 11, **characterized in that** the plates are pressed sealingly together with the folded filter element (59).

13. A cartridge filter according to any one of claims 1 to 12, **characterized in that** the plates (1, 1') engage with a web (58) over the folded filter element (59) at least in the region of one end face.

14. A construction kit for producing a cartridge filter according to any of claims 1 to 13, **characterized by**:
- a parallelepipedic folded filter element (59), and
- four identically designed plates (1) which are capable of being fixed to one another by means of at least one plug connection and of being pressed sealingly together with the folded filter element(59).

## Revendications

1. Filtre à cassette comprenant un élément filtrant (59) et un cadre constitué de panneaux (1), les panneaux (1) pouvant être placés autour de l'élément filtrant (59) et reliés les uns aux autres au niveau de leurs faces (3, 4), **caractérisé en ce que** les panneaux (1, 1') sont configurés comme pièces détachées de longueur et de forme concordantes et présentent des moyens d'un raccord embrochable (6, 7 ; 8, 9 ; 10, 11) qui coopèrent avec des moyens correspondants de panneaux (1') voisins.

2. Filtre à cassette selon la revendication 1, **caractérisé en ce qu'**un raccord embrochable comprend au moins une saillie (6 ; 10 ; 13) d'un premier panneau (1), qui peut être enclenchée dans un creux (7; 11 ; 12) d'un deuxième panneau (1').

3. Filtre à cassette selon la revendication 1 ou 2, **caractérisé en ce que** la saillie (6 ; 10 ; 13) s'étend en direction du deuxième panneau (1').

4. Filtre à cassette selon l'une des revendications 1 à 3, **caractérisé en ce que**, dans la zone du raccord embrochable (6,7) , les panneaux (1, 1') sont configurés comme cadre supérieur (5) et/ou comme cadre inférieur.

5. Filtre à cassette selon l'une des revendications 1 à 4, **caractérisé en ce que** le raccord embrochable (6, 7) présente des moyens d'arrêt (14, 15) supplémentaires.

6. Filtre à cassette selon l'une des revendications 1 à 5, **caractérisé en ce que** le raccord embrochable (8, 9) est constitué de languettes pliables (8 ; 38).

7. Filtre à cassette selon l'une des revendications 1 à 6, **caractérisé en ce que** le raccord embrochable (10, 11) est réalisé sous la forme d'un assemblage de cames d'arrêt et d'une rainure (10, 11), s'étendant le long des faces (3, 4) de deux panneaux (1, 1').

8. Filtre à cassette selon l'une des revendications 1 à 7, **caractérisé en ce que** l'assemblage est protégé par une grille de protection (2) qui relie les panneaux (1, 1') au moins dans la zone de l'une des faces frontales de l'élément filtrant.

9. Filtre à cassette selon la revendication 8, **caractérisé en ce que** les grilles de protection (2) et les panneaux (1, 1') sont fixés les uns aux autres à l'aide d'un raccord à crans (21, 22).

10. Filtre à cassette selon l'une des revendications 1 à 9, **caractérisé en ce que** l'élément filtrant (59) est appliqué sous précontrainte aux panneaux (1, 1').

11. Filtre à cassette selon l'une des revendications 1 à 10, **caractérisé en ce qu'**un élément d'étanchéité (60) est inséré entre l'élément filtrant à plis (59) et les panneaux (1, 1').

12. Filtre à cassette selon la revendication 10 ou 11, **caractérisé en ce que** les panneaux sont scellés de façon étanche avec l'élément filtrant à plis (59).

13. Filtre à cassette selon l'une des revendications 1 à 12, **caractérisé en ce que** les panneaux (1, 1') recouvrent l'élément filtrant à plis (59), au moins dans la zone d'une face frontale, par une nervure (58).

14. Kit pour réaliser un filtre à cassette selon la revendication 1 à 13, **caractérisé par**
- un élément filtrant à plis (59) de forme parallélépipède, et
- quatre panneaux (1) de configuration concordante, qui peuvent être fixés les uns aux autres à l'aide d'au moins un raccord embrochable et scellés de façon étanche avec l'élément filtrant à plis (59).
